# EUROPEAN PATENT SPECIFICATION

(11) **EP 1 741 030 B1**
(45) Date of publication and mention of the grant of the patent: **14.05.2008**
(21) Application number: 05718712.2
(22) Date of filing: 12.04.2005
(51) Int. Cl.: G06F 11/14, G06F 9/445, G06F 3/06

(54) **RESTORING THE FIRMWARE AND ALL PROGRAMMABLE CONTENT OF AN OPTICAL DRIVE**
WIEDERHERSTELLUNG DER FIRMWARE UND DES GESAMTEN PROGRAMMIERBAREN INHALTS EINES OPTISCHEN LAUFWERKS
PROCEDE PERMETTANT DE RETABLIR UN MICROLOGICIEL ET TOUS LES CONTENUS PROGRAMMABLES D'UN LECTEUR OPTIQUE

(30) Priority: 20.04.2004 EP 04101622
(43) Date of publication of application: 10.01.2007
(73) Proprietor: Koninklijke Philips Electronics N.V., 5621 BA Eindhoven (NL)
(72) Inventor: VANGEEL, Jurgen, M., NL-5656 AA Eindhoven (NL)
(74) Representative: Uittenbogaard, Frank
(86) International application number: PCT/IB2005/051207
(87) International publication number: WO 2005/103896

(56) References cited:
- EP-A- 0 756 227
- EP-A- 1 403 865
- WO-A-20/04003733
- US-A- 5 579 522
- US-B1- 6 253 281
- US-B1- 6 564 371
- US-B1- 6 708 231

## Description

### FIELD OF THE INVENTION

The present invention relates to a method of providing the possibility to restore a first operational condition of an optical drive as well as a method of restoring a first operational condition of an optical drive. Furthermore, the present invention relates to an optical drive.

### BACKGROUND OF THE INVENTION

When optical drives, for example CD or DVD drives, are distributed on the market, it is possible that these optical drives still contain errors (bugs), or that certain features of the optical drives have not yet been enabled in the optical drives. Therefore, the user is provided with the possibility to upgrade (flash) his optical drive with newer firmware that contains certain fixes for bugs and/or enables new features of the drive.

However, it is possible that the newer firmware does not meet the standards requested by the user. This for example may be the case if the new firmware contains a new bug which bothers the user more than the error which triggered him to upgrade the optical drive. In this case, the user may want to reverse the upgrade and restore the first operational condition of the optical drive, i.e. the operational condition before the upgrade. However, even after a re-flash with the old firmware there may arise the problem that the first operational condition is not successfully restored. This in many cases is due to the fact that a new firmware can also reprogram other programmable content (which for example is stored in an EEPROM) of the optical drive which remains in the updated state, even after a re-flash.

Furthermore, it is possible that programmable content of the optical drive is changed in an unwanted manner even if no firmware update is carried out, in which case such unwanted changes of programmable content may for example be triggered by the user by mistake or by any other event. Also such unwanted changes of programmable content lead to a change from a first operational condition to a second operational condition.

US 6,564,371 discloses a method to enable a user to store a known and operational version of software and a new version of software (possibly not operational) in a memory on a device. The user can test the new software and have an automatic fallback mechanism which loads the old version of software in the device if the new version fails to operate.

It is the object of the present invention to make sure that it is always possible to restore a first operational condition of an optical drive, i.e. the operational condition before an upgrade with new firmware and/or before an unwanted change of programmable content due to any other reason.

### SUMMARY OF THE INVENTION

The above object is solved by the features of the independent claims. Further developments and preferred embodiments of the invention are outlined in the dependent claims.

In accordance with a first aspect of the present invention there is provided a method of providing the possibility to restore a first operational condition of an optical drive, said method comprising the following steps: a) sending a first command to said optical drive instructing said optical drive to enter a backup mode, when said optical drive is in said first operational condition; b) providing, by said optical drive, all restore information necessary to restore said first operational condition; and c) storing said restore information on a storage medium.

In accordance with a second aspect of the present invention this object is achieved by a method of restoring a first operational condition of an optical drive, said method comprising the following steps: a) sending a first command to said optical drive instructing said optical drive to enter a backup mode, when said optical drive is in said first operational condition; b) providing, by said optical drive, all restore information necessary to restore said first operational condition; c) storing said restore information on a storage medium; d) sending a second command to said optical drive instructing said optical drive to enter an update/change mode; e) providing update/change information to said optical drive, said update/change information changing said first operational condition to a second operational condition; f) sending a third command to said optical drive instructing said optical drive to enter a restore mode; g) reading said restore information from said storage medium and providing said restore information to said optical drive, said restore information changing a current operational condition to said first operational condition.

This solution allows the user to store the currently loaded firmware and all other programmable content in the drive on the storage medium. This storage or "backup" medium then allows the user to return to the first operational condition, i.e. the state at the time of the backup, whenever he wants.

Step a) preferably comprises sending said first command by a user. The command may be sent in any suitable manner, for example via a remote control or any other device connected to the optical drive.

One preferred solution in this context is that said step a) comprises actuating control means of said optical drive.

Preferred embodiments of the methods in accordance with the invention enable said restore information to restore the content of all non-volatile means that might be affected directly or indirectly by updating said optical drive. As already mentioned above, these memory means may for example comprise a flash memory which is flashed during an update, and also one or more EEPROMs which contain programmable content that might be changed in an unwanted manner, for example programmable content which may not be restored by a re-flash procedure in accordance with the prior art.

One preferred solution in accordance with the present invention is that said step c) comprises writing, by said optical drive, said restore information on an optical storage medium. The optical storage medium in this case preferably is constructed in such a way that it is recognised as a so called "flash-disk". Such a flash-disk is a disk which contains a firmware, and when inserted into an optical drive, it will trigger the device to load another firmware.

In accordance with other embodiments said step c) comprises storing said restore information in memory means associated with said optical drive. The memory means in this case may for example be in the form of any suitable semiconductor device providing non-volatile memory capabilities. In cases where the optical drive itself comprises a hard disk, also this hard disk may form the memory means.

Furthermore, it is possible that said step c) comprises forwarding, by said optical drive, said restore information to a device capable of storing said restore information on a storage medium. In this case the device may especially be a computer to which the optical drive is coupled.

The following features relate to the case where the restore process is not only made possible, but is actually performed.

To enter the update/change mode it is possible that said step d) comprises sending said second command by a user. Also in this case the command may be entered in any suitable manner. In general, said second command may be formed by any event that might lead to a condition in which an unwanted change of content of non-volatile memory means of the optical drive is possible.

For example, also in this context it is possible that said step d) comprises actuating control means of said optical drive.

In accordance with a preferred embodiment of the present invention said update/change information in said step e) is provided on an optical storage medium. Also in this case the optical storage medium is preferably a flash-disk. However, it is for example also possible that said change information is provided directly or indirectly by the user.

It is also possible that said update/change information in sad step e) is provided via a computer. The computer may be coupled to the optical drive in any suitable manner known to the person skilled in the art.

In accordance with another embodiment of the present invention said update/change information in said step e) is provided via the internet. In this case the optical drive itself may be coupled to the internet or the optical drive may be coupled to a device having internet access.

To enter the restore mode it is possible that said step f) comprises sending said third command by a user.

Also in this context it is possible that said step f) comprises actuating control means of said optical drive. The control means for entering one or more of the commands mentioned above may be formed, without being limited thereto, by for example the eject button of the optical drive.

Furthermore, it is possible that said step f) comprises inserting an optical storage medium into said optical drive. For example if the optical storage medium is formed by a flash-disk, the optical drive recognizes the flash-disk and automatically enters the restore mode.

In accordance with one preferred embodiment of the present invention said restore information in said step g) is provided on an optical storage medium. The optical storage medium, for example a flash-disk, preferably is an optical storage medium created in step c) of the methods in accordance with the invention.

However, it is also possible that said restore information in said step g) is provided via memory means associated with said optical drive. The memory means may be embodied as mentioned above in connection with step c).

Another possibility that is within the scope of the present invention is that said restore information in said step g) is provided via a device capable of reading said restore information. Again, the device for example may be a computer. In this case, it is also possible that an application on the computer can construct the required disk layout for a flash-disk or can generate a flash-file which may be stored for example on the hard disk.

In accordance with a third aspect of the present invention there is provided an optical drive comprising at least the following modes of operation: a backup mode for providing all restore information necessary to restore a first operational condition of said optical drive; an update/change mode for changing on the basis of update/change information said first operational condition to a second operational condition; a restore mode for changing on the basis of said restore information a current operational condition to said first operational condition. Such an optical drive is suitable to perform the above-mentioned method of restoring the first operational condition of the optical drive. Therefore, to avoid repetition, at this point reference is made to the respective explanations above.

In the following, preferred embodiments of the optical drive in accordance with the invention are outlined. Also as regards the advantages and characteristics of these embodiments, to avoid repetition reference is made to the respective explanations in connection with the methods in accordance with the invention.

For all embodiments of the optical drive in accordance with the invention, it is preferred that, in said restore mode, it is capable of restoring the content of all non-volatile memory means that might be affected directly or indirectly in said update/change mode on the basis of said restore information.

In accordance with one embodiment of the optical drive, it is capable of writing said restore information onto an optical storage medium.

However, it is also possible that the optical drive comprises memory means and means for storing said restore information in said memory means. A further possibility is that the optical drive comprises means for forwarding said restore information to a device capable of storing said restore information.

In connection with receiving update/change information for the optical drive it is possible that the optical drive is capable of reading said update/change information from an optical storage medium.

In accordance with a further development of the optical drive it comprises means for receiving said update/change information from a device providing said update/change information.

Furthermore, it is possible that the optical drive in accordance with the invention comprises means for receiving said restore information from a device providing said restore information.

These and other aspects of the invention will be apparent from and elucidated with reference to the embodiments described hereinafter.

### BRIEF DESCRIPTION OF THE DRAWINGS

Figure 1 shows a flowchart illustrating one embodiment of the method of providing the possibility to restore a first operational condition of an optical drive in accordance with the invention, as well as a method of restoring a first operational condition of an optical drive in accordance with the invention;
Figure 2 is a schematic and simplified block diagram illustrating a first embodiment of the optical drive in accordance with the invention;
Figure 3 is a schematic and simplified block diagram illustrating a second embodiment of the optical drive in accordance with the invention;
Figure 4 is a schematic and simplified block diagram illustrating a third embodiment of the optical drive in accordance with the invention; and
Figure 5 is a schematic and simplified block diagram illustrating a fourth embodiment of the optical drive in accordance with the invention.

### DESCRIPTION OF PREFERRED EMBODIMENTS

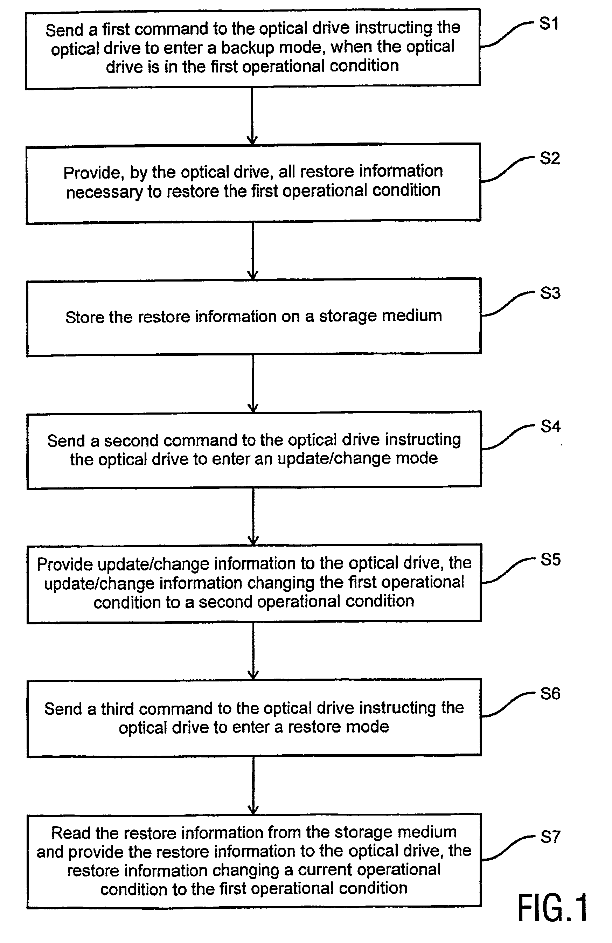

Steps S1 to S3 shown in the flowchart of Figure 1 illustrate a general embodiment of the method of providing the possibility to restore a further operational condition in accordance with the invention, whereas steps S 1 to S7 of the flowchart illustrate a general embodiment of the method of restoring a first operational condition of an optical drive in accordance with the invention.

In step S1 a first command is sent to the optical drive which for example may be a CD and/or DVD drive. The first command instructs the optical drive to enter a backup mode. The backup mode is entered while the optical drive is in a first operational condition which is defined by the firmware currently loaded and further adjustments made by the user which are stored in non-volatile memory means of the optical drive. The first command may be sent for example by pressing the eject button of the optical device in a special manner or by actuating another control element of the optical device. It is also possible that the first command is sent to the optical drive via a remote control or via another device that is coupled to the optical drive, for example a computer. In accordance with the invention the user for example triggers the backup mode before he installs a new firmware. However, it is also possible that the user triggers the backup mode before doing anything else that might change content of non-volatile memory means in an unwanted manner. Of course, it is also possible that the backup mode is entered only for safety reasons from time to time to create a backup. To inform the user that the backup mode has been successfully entered, the optical drive may for example eject the tray. In this case the user may insert a suitable storage medium and close the tray to trigger step S2.

In step S2 the optical drive provides all restore information necessary to restore the first operational condition directly to a storage medium or to any other suitable device. The restore information not only contains information that corresponds to the firmware version currently installed, but also all other information that might be affected by a firmware update.

In step S3 the restore information is stored on a suitable storage medium. In accordance with a highly preferred embodiment of the invention this storage medium is formed by an optical storage medium, for example a CD or DVD, to which the optical drive can write to create a so-called flash-disk. However, it is also possible to store the restore information on a hard disk associated with the optical drive itself or with a computer to which the optical drive is coupled. In general, any suitable storage medium can be used in so far as it is guaranteed that the restore information, if necessary, may be supplied to the optical drive in a suitable manner to restore the first operational condition. To inform the user that the restore information has been successfully written to the storage medium, the optical drive may, for example automatically, again eject the tray, so that the user may take out the storage medium. If the storage medium for example was a writable CD or DVD, the user may take out the CD or DVD after step S3 is finished. After step S3 is finished the user has the possibility to restore the first operational condition, and therefore the respective method in accordance with the invention ends with step S3.

By now it is assumed that the user wants to update the firmware of the optical drive. Accordingly, in step S4 a second command is sent to the optical drive by the user in any suitable manner. This as such is known in the art. However, it should be clear that a firmware update is only one possible event that might change content of non-volatile memory means in an unwanted manner, and that it is within the scope of the present invention that also unwanted changes triggered by any event other than a firmware update may be made undone.

In step S5 update/change information is provided to the optical drive to change the firmware thereof. This firmware change in accordance with the wording used herein is one example of changing said first operational condition to a second operational condition. By such an update process, as mentioned above, in many cases not only the firmware itself is changed but also other programmable content of the optical drive which in accordance with the prior art cannot be restored by simply re-flashing the optical drive.

By now it is assumed that the user for any reason is not satisfied with the results of the firmware update and therefore wants to restore the first operational condition, i.e. the condition before the firmware update in the present example. In this context it is emphasized that the user may have the possibility to return to more than one former condition as long as the restore information of the respective condition is available.

In step S6 a third command is sent to the optical drive by the user, again in any suitable manner. The third command instructs the optical drive to enter the restore mode. A simple possibility to enter the restore mode might for example be that the user inserts a flash-disk which is automatically recognized by the optical drive.

In step S7 the restore information is read from the storage medium, for example the flash-disk. Then the restore information is provided to the optical drive, or a component thereof, such that the restore information changes the current operational condition to the first operational condition of the optical drive. To follow the above example, the user may take out the flash-disk from the drive when the restore process is complete.

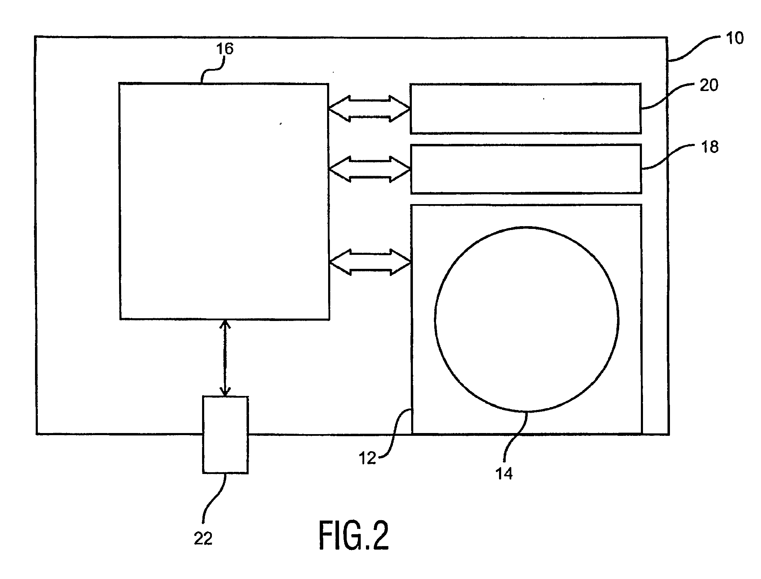

Figure 2 is a schematic and simplified block diagram illustrating a first embodiment of the optical drive in accordance with the invention. The optical drive 10 illustrated in Figure 2 comprises a read/write unit 12, for example adapted to read/write CDs or DVDs. A respective optical storage medium 14 is inserted in the read/write unit 12. Furthermore, there is provided a controller 16 which communicates with the further components illustrated in Figure 2 and controls the whole drive. Two non-volatile memories 18 and 20 are schematically illustrated. For example the non-volatile memory 18 may be a flash memory and the non-volatile memory 20 may be an EEPROM. To simplify the explanation, it may be assumed that the memory 18 contains the firmware and that the memory 20 contains information programmable by the user. Furthermore, an eject button 22 is schematically shown in Figure 2.

The optical drives shown in the drawings are all suitable to perform the methods in accordance with the invention. Therefore, to avoid repetition, the process necessary to provide the possibility to restore a former operational condition as well as the process of restoring such a condition itself is only explained in short form in the following.

Referring back to Figure 2, the user for example may enter the backup mode by pressing the eject button 22 for a longer time. In response thereto the optical drive 10 ejects the tray and the user inserts a writable optical storage medium. When the tray is closed again, the optical drive 10 writes all restore information necessary to restore the actual operational condition on the optical storage medium to create a flash-disk.

By now it is assumed that the user has changed the first operational condition to a second operational condition by performing a firmware update, but is not satisfied with the results of this update.

Consequently, the user inserts the flash-disk that was created during the backup mode. Thereby the optical drive enters a restore mode in which the current operational condition is changed back to the first operational condition. By this restore process, not only the old firmware is stored in the memory 18, but also the corresponding content of the memory 20 is restored.

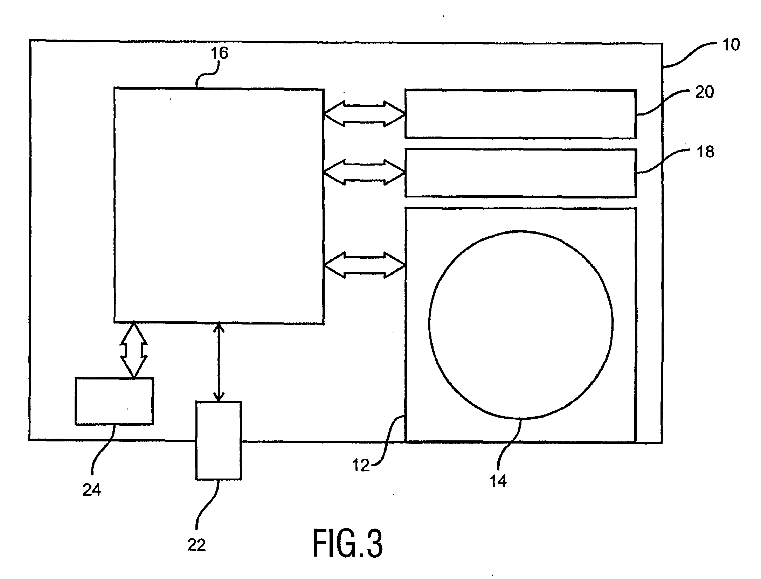

Figure 3 is a schematic and simplified block diagram illustrating a second embodiment of the optical drive in accordance with the invention. The optical drive shown in Figure 3 corresponds to the optical drive of Figure 2, with the following exception: The optical drive in accordance with Figure 3 comprises further memory means 24 in which the restore information may be stored. The memory means 24 for example may be in the form of a hard disk drive that is associated with the optical drive 10. Of course, it is also possible that the further memory means are in the form of any suitable semiconductor memory device. The arrangement in accordance with Figure 3 is useful, for example, if the unit 12 is not a read/write unit but also a read unit.

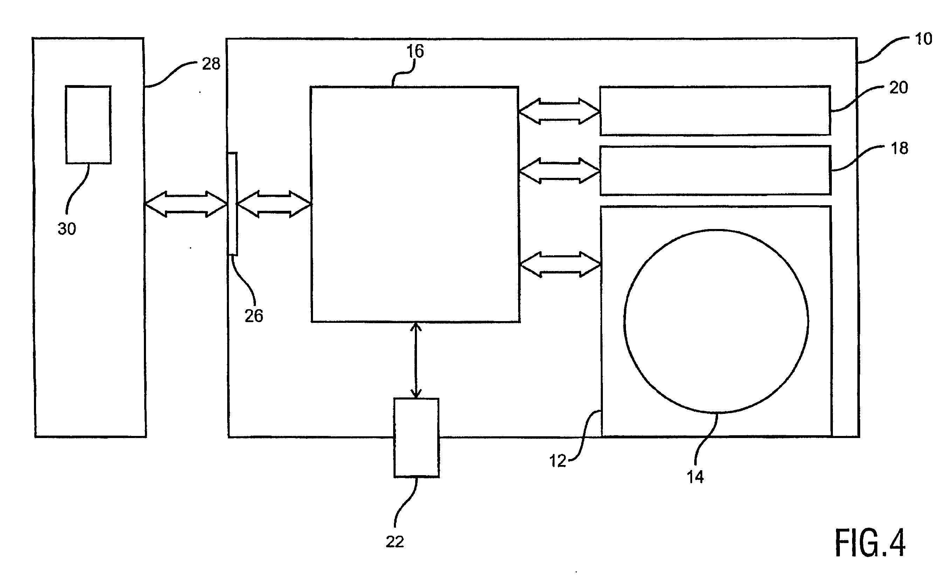

Figure 4 is a schematic and simplified block diagram illustrating a third embodiment of the optical drive in accordance with the invention. The embodiment shown in Figure 4 corresponds to the embodiment of Figure 2, with the following exception: In accordance with Figure 4 there is provided an interface 26 by which the optical drive 10 is coupled to a device 28 in any suitable manner known to the person skilled in the art. The device 28 for example may be a computer which comprises a hard disk drive 30 to which the restored information is written, for example in the form of a flash-file. Consequently, when the user wants to perform a restore process, the necessary restore information is provided by the device 28 to the optical drive 10.

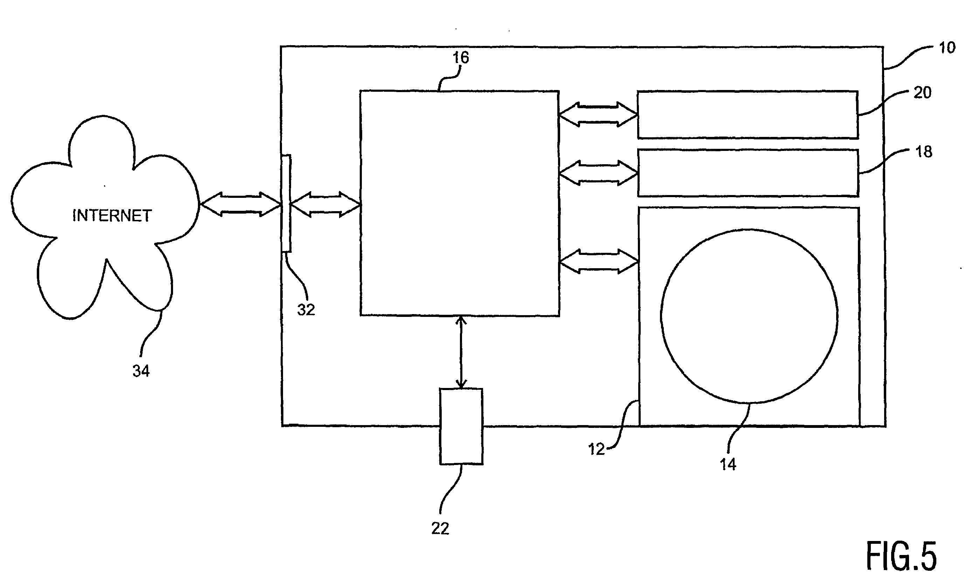

Figure 5 is a schematic and simplified block diagram illustrating a fourth embodiment of the optical drive in accordance with the invention. The embodiment shown in Figure 5 corresponds to the embodiment of Figure 2, with the following exception: In accordance with Figure 5 the optical drive 10 comprises an interface 32 by which the optical drive 10 may access the internet 34. In such a case update/change information may also be obtained directly from the internet. While in principle it is possible to also store the restore information on an internet server, it is preferred that this restore information is stored on a optical storage medium as explained in connection with Figure 2.

Furthermore, equivalents not described above may also be employed without departing from the scope of the invention, which is defined in the accompanying claims.

## Claims

1. A method for providing the possibility to restore a first operational condition of an optical drive (10), said method comprising the following steps:
a) sending a first command to said optical drive (10) instructing said optical drive (10) to enter a backup mode, when said optical drive (10) is in said first operational condition;
b) providing, by said optical drive (10), all restore information necessary to restore said first operational condition; said restore information being capable to restore the content of all non-volatile memory means (18, 20) that might be affected directly or indirectly by updating said optical drive; and
c) storing said restore information by said optical drive (10), on an optical storage medium (14) inserted in said optical drive (10).

2. The method of claim 1, **characterized by** further comprising the following steps:
d) sending a second command to said optical drive (10) instructing said optical drive (10) to enter an update/change mode;
e) providing update/change information to said optical drive (10), said update/change information changing said first operational condition to a second operational condition;
f) sending a third command to said optical drive (10) instructing said optical drive (10) to enter a restore mode;
g) reading said restore information from said optical storage medium (14) and providing said restore information to said optical drive (10), said restore information changing a current operational condition to said first operational condition.

3. The method according to claim 2, **characterized in that** said step c) further cromprises storing said restore information in further memory means (24) associated to said optical drive (10).

4. The method according to claim 2, **characterized in that** said step d) and/or either said step f) comprises actuating control means (22) of said optical drive.

5. The method according to claim 2, **characterized in that** said update/change information in said step e) is provided on an optical storage medium (14).

6. The method according to claim 2, **characterized in that** said restore information in said step g) is provided via further memory means (24) associated to said optical drive (10).

7. An optical drive (10), comprising at least the following modes of operation:
- a backup mode for providing all restore information necessary to restore a first operational condition of said optical drive;
- an update/change mode for changing on the basis of update/change information said first operational condition to a second operational condition;
- a restore mode for changing on the basis of said restore information a current operational condition to said first operational condition;
wherein in said restore mode it is capable to restore the content of all non-volatile memory means (18, 20) that might be affected directly or indirectly in said update/change mode on the basis of said restore information and wherein the optical drive (10) is enabled to store said restore information on an optical storage medium (14) inserted in said optical drive (10).

8. The optical drive according to claim 7, **characterized in that** it comprises further memory means (24) and means (16) for storing said restore information in said further memory means (24).

9. The optical drive (10) according to claim 7, **characterized in that** it comprises means (26) for forwarding said restore information to another device (28) capable to store said restore information.

10. The optical drive (10) according to claim 7, **characterized in that** it comprises means (26) for receiving said update/change information from another device (28) providing said update/change information.

11. The optical drive (10) according to claim 10, **characterized in that** it comprises means (26) for receiving said restore information from another device (28) providing said restore information.

## Patentansprüche

1. Verfahren zur Schaffung der Möglichkeit, einen ersten Betriebszustand eines optischen Laufwerks (10) wiederherzustellen, wobei das Verfahren die folgenden Schritte umfasst:
a) Senden eines ersten Befehls an das optische Laufwerk (10), der das optische Laufwerk (10) anweist, in eine Sicherungs-Betriebsart einzutreten, wenn sich das optische Laufwerk (10) in dem ersten Betriebszustand befindet;
b) Liefern, durch das optische Laufwerk (10), aller Wiederherstellungsinformationen, die notwendig sind, um den ersten Betriebszustand wiederherzustellen; wobei die Wiederherstellungsinformationen in der Lage sind, den Inhalt aller nichtflüchtigen Speichermittel (18, 20) wiederherzustellen, welche direkt oder indirekt von einem Aktualisieren des optischen Laufwerks betroffen sein könnten; und
c) Speichern der Wiederherstellungsinformationen durch das optische Laufwerk (10) auf einem optischen Speichermedium (14), das in das optische Laufwerk (10) eingelegt ist.

2. Verfahren nach Anspruch 1, **dadurch gekennzeichnet, dass** es ferner die folgenden Schritte umfasst:
d) Senden eines zweiten Befehls an das optische Laufwerk (10), der das optische Laufwerk (10) anweist, in eine Aktualisierungs-/Änderungs-Betriebsart einzutreten;
e) Liefern von Aktualisierungs-/Änderungsinformationen an das optische Laufwerk (10), wobei die Aktualisierungs-/Änderungsinformationen den ersten Betriebszustand in einen zweiten Betriebszustand ändern;
f) Senden eines dritten Befehls an das optische Laufwerk (10), der das optische Laufwerk (10) anweist, in eine Wiederherstellungs-Betriebsart einzutreten;
g) Lesen der Wiederherstellungsinformationen aus dem optischen Speichermedium (14) und Liefern der Wiederherstellungsinformationen an das optische Laufwerk (10), wobei die Wiederherstellungsinformationen einen aktuellen Betriebszustand in den ersten Betriebszustand ändern.

3. Verfahren nach Anspruch 2, **dadurch gekennzeichnet, dass** der Schritt c) ferner das Speichern der Wiederherstellungsinformationen in weiteren Speichermitteln (24) umfasst, die mit dem optischen Laufwerk (10) verbunden sind.

4. Verfahren nach Anspruch 2, **dadurch gekennzeichnet, dass** der Schritt d) und/oder der Schritt f) das Betätigen von Steuerungsmitteln (22) des optischen Laufwerks umfasst.

5. Verfahren nach Anspruch 2, **dadurch gekennzeichnet, dass** die Aktualisierungs-/Änderungsinformationen in dem Schritt e) auf einem optischen Speichermedium (14) geliefert werden.

6. Verfahren nach Anspruch 2, **dadurch gekennzeichnet, dass** die Wiederherstellungsinformationen in dem Schritt g) über weitere Speichermittel (24) geliefert werden, die mit dem optischen Laufwerk (10) verbunden sind.

7. Optisches Laufwerk (10), das mindestens die folgenden Betriebsarten umfasst:
- eine Sicherungs-Betriebsart zum Liefern aller Wiederherstellungsinformationen, die notwendig sind, um einen ersten Betriebszustand des optischen Laufwerks wiederherzustellen;
- eine Aktualisierungs-/Änderungs-Betriebsart zum Ändern des ersten Betriebszustands in einen zweiten Betriebszustand auf der Grundlage von Aktualisierungs-/Änderungsinformationen;
- eine Wiederherstellungs-Betriebsart zum Ändern eines aktuellen Betriebszustands in den ersten Betriebszustand auf der Grundlage der Wiederherstellungsinformationen;
wobei es in der Wiederherstellungs-Betriebsart in der Lage ist, den Inhalt aller nichtflüchtigen Speichermittel (18, 20), welche direkt oder indirekt in der Aktualisierungs-/Änderungs-Betriebsart betroffen sein könnten, auf der Grundlage der Wiederherstellungsinformationen wiederherzustellen, und wobei das optische Laufwerk (10) in die Lage versetzt wird, die Wiederherstellungsinformationen auf einem optischen Speichermedium (14) zu speichern, das in das optische Laufwerk (10) eingelegt ist.

8. Optisches Laufwerk nach Anspruch 7, **dadurch gekennzeichnet, dass** es weitere Speichermittel (24) und Mittel (16) zum Speichern der Wiederherstellungsinformationen in den weiteren Speichermitteln (24) umfasst.

9. Optisches Laufwerk (10) nach Anspruch 7, **dadurch gekennzeichnet, dass** es Mittel (26) zum Weiterleiten der Wiederherstellungsinformationen zu einer anderen Einrichtung (28) umfasst, die in der Lage ist, die Wiederherstellungsinformationen zu speichern.

10. Optisches Laufwerk (10) nach Anspruch 7, **dadurch gekennzeichnet, dass** es Mittel (26) zum Empfangen der Aktualisierungs-/Änderungsinformationen von einer anderen Einrichtung (28) umfasst, welche die Aktualisierungs-/Änderungsinformationen liefert.

11. Optisches Laufwerk (10) nach Anspruch 10, **dadurch gekennzeichnet, dass** es Mittel (26) zum Empfangen der Wiederherstellungsinformationen von einer anderen Einrichtung (28) umfasst, welche die Wiederherstellungsinformationen liefert.

## Revendications

1. Procédé laissant la possibilité de restaurer une première condition de fonctionnement d'un lecteur optique (10), ledit procédé comprenant les étapes suivantes:
a) envoi d'une première commande audit lecteur optique (10) indiquant audit lecteur optique (10) d'entrer dans un mode de sauvegarde, quand ledit lecteur optique (10) se trouve dans ladite première condition de fonctionnement;
b) fourniture, par ledit lecteur optique (10), de toutes les informations de restauration nécessaires pour restaurer ladite première condition de fonctionnement; lesdites informations de restauration permettant de restaurer le contenu de tous les moyens de mémoire non volatile (18, 20) qui pourraient être affectés directement ou indirectement par une mise à jour dudit lecteur optique; et
c) stockage desdites informations de restauration par ledit lecteur optique (10), sur un support de stockage optique (14) inséré dans ledit lecteur optique (10).

2. Procédé selon la revendication 1, **caractérisé en ce qu'**il comprend de plus les étapes suivantes:
d) envoi d'une deuxième commande audit lecteur optique (10) indiquant audit lecteur optique (10) d'entrer dans un mode de mise à jour/modification;
e) fourniture d'informations de mise à jour/modification audit lecteur optique (10), lesdites informations de mise à jour/modification changeant ladite première condition de fonctionnement en une deuxième condition de fonctionnement;
f) envoi d'une troisième commande audit lecteur optique (10) indiquant audit lecteur optique (10) d'entrer dans un mode de restauration;
g) lecture desdites informations de restauration à partir dudit support de stockage optique (14) et fourniture desdites informations de restauration audit lecteur optique (10), lesdites informations de restauration changeant une condition de fonctionnement courante en ladite première condition de fonctionnement.

3. Procédé selon la revendication 2, **caractérisé en ce que** ladite étape c) comprend de plus un stockage desdites informations de restauration dans d'autres moyens de mémoire (24) associés audit lecteur optique (10).

4. Procédé selon la revendication 2, **caractérisé en ce que** ladite étape d) et/ou ladite étape f) comprennent des moyens de commande de fonctionnement (22) dudit lecteur optique.

5. Procédé selon la revendication 2, **caractérisé en ce que** lesdites informations de mise à jour/modification dans ladite étape e) sont fournies sur un support de stockage optique (14).

6. Procédé selon la revendication 2, **caractérisé en ce que** lesdites informations de restauration dans ladite étape g) sont fournies via d'autres moyens de mémoire (24) associés audit lecteur optique (10).

7. Lecteur optique (10), comprenant au moins les modes de fonctionnement suivants:
- un mode de sauvegarde permettant de fournir toutes les informations de restauration nécessaires pour restaurer une première condition de fonctionnement dudit lecteur optique;
- un mode de mise à jour/modification pour changer sur la base des informations de mise à jour/modification ladite première condition de fonctionnement en une deuxième condition de fonctionnement;
- un mode de restauration pour changer sur la base desdites informations de restauration une condition de fonctionnement courante en ladite première condition de fonctionnement;
dans lequel dans ledit mode de restauration, il est possible de restaurer le contenu de tous les moyens de mémoire non volatile (18, 20) qui pourraient être affectés directement ou indirectement dans ledit mode de mise à jour/modification sur la base desdites informations de restauration et dans lequel le lecteur optique (10) est activé pour stocker lesdites informations de restauration sur un support de stockage optique (14) inséré dans ledit lecteur optique (10).

8. Lecteur optique selon la revendication 7, **caractérisé en ce qu'**il comprend d'autres moyens de mémoire (24) et des moyens (16) pour stocker lesdites informations de restauration dans lesdits autres moyens de mémoire (24).

9. Lecteur optique (10) selon la revendication 7, **caractérisé en ce qu'**il comprend des moyens (26) pour transférer lesdites informations de restauration vers un autre dispositif (28) capable de stocker lesdites informations de restauration.

10. Lecteur optique (10) selon la revendication 7, **caractérisé en ce qu'**il comprend des moyens (26) pour recevoir lesdites informations de mise à jour/modification d'un autre dispositif (28) fournissant lesdites informations de mise à jour/modification.

11. Lecteur optique (10) selon la revendication 10, **caractérisé en ce qu'**il comprend des moyens (26) pour recevoir lesdites informations de restauration d'un autre dispositif (28) fournissant lesdites informations de restauration.
